# EUROPÄISCHE PATENTSCHRIFT

(11) **EP 0 713 588 B1**
(45) Veröffentlichungstag und Bekanntmachung des Hinweises auf die Patenterteilung: **07.04.1999**
(21) Anmeldenummer: 94921583.4
(22) Anmeldetag: 22.07.1994
(51) Int. Cl.: G06F 15/80, G06F 13/42

(54) **ARCHITEKTUR FÜR EINE RECHENANLAGE**
COMPUTER ARCHITECTURE
ARCHITECTURE POUR SYSTEME INFORMATIQUE

(30) Priorität: 09.08.1993 DE 4326740
(43) Veröffentlichungstag der Anmeldung: 29.05.1996
(73) Patentinhaber: Kopp, Martin, D-68259 Mannheim (DE)
(72) Erfinder: Kopp, Martin, D-68259 Mannheim (DE)
(86) Internationale Anmeldenummer: DE9400848
(87) Internationale Veröffentlichungsnummer: WO9504973

(56) Entgegenhaltungen:
- EP-A- 0 107 263
- EP-A- 0 283 628
- EP-A- 0 352 080
- EP-A- 0 528 396
- US-A- 4 570 220
- EDN ELECTRICAL DESIGN NEWS, 10. Oktober 1991, NEWTON, MASSACHUSETTS US Seiten 97 - 102 CONNER 'Boards speed windows and vie as standards'

## Beschreibung

Im Bereich der Benutzerschnittstelle von Rechenanlagen werden große Datenmengen gehandhabt und hohe Rechenleistungen gefordert, da einerseits die Auflösung der verwendeten bildgebenden Systeme ständig steigt und neue Anwendungen wie Animation und Desktop Video hohe Datenraten an strukturierter bzw. unstrukturierter Grafik benötigen, andererseits bei ständig anwachsender Komplexität der Bedienstrukturen immer kürzere Antwortzeiten von solchen interaktiven Systemen verlangt werden.

Es ist bekannt, daß zur Erzeugung der Darstellungen, die von dem bildgebenden System dem Menschen zugänglich gemacht werden, neben dem Hauptprozessor der Rechenanlage eventuell auch zusätzliche passive oder aktive Komponenten eingesetzt werden (Foley, van Dam, Feiner, Hughes - Computer Graphics, Principles and Practice - Second Edition, Addison-Wesley Publishing Company, Reading, Massachusetts - ISBN 0-201-12110-7 und im folgenden speziell EP 0350911 A2 für einen Serviceprozessor). Aus dem Dokument D1 (EP-A-0 528396), Seite 3, Zeilen 2-9, ist bekannt, daß die Aufgaben zur Verwaltung der Benutzerschnittstelle in einem Netzwerk einer industriellen Prozeß-Steuerung einem speziellen Programm (user interface server program) übertragen werden können, das die Ein- und Ausgaben auf jedem Knoten (client terminal) durchführen kann. Im Dokument D2 (US-A_4 570 220) wird eine Rechnerarchitektur mit mehreren Bussystemen und speziellen Vorrichtungen zum Austausch von Daten und Nachrichten vorgestellt.

Nicht berücksichtigt werden in der Struktur heutiger Systeme die hohen Anforderungen, die zur Realisierung der Bedienfunktionalität der Benutzerschnittstelle erforderlich sind, sowie die großen Datenmengen, die in kurzer Zeit von außerhalb des Grafiksubsystems und des Hauptprozessors, also beispielsweise von einem Massenspeicher, einer Ein-/ Ausgabeschnittstelle etc., eingebracht oder dorthin ausgelagert werden müssen. Beispielsweise belegt der Bildspeicher in einem System mit angestrebter Auflösung von 1600 mal 1200 Bildpunkten mit einer Farbtiefe von 32 Bit pro Bildpunkt ca. 7,5 MByte. Zur Erneuerung des angezeigten Bildes müssen, bei einer Animation mit 25 Bildern pro Sekunde, ca. 187 MByte/s neue Daten in diesen Speicher eingebracht werden. Bei einer angestrebten Bildwiederholrate von 100 Hz müssen jedoch gleichzeitig 750 MByte/s aus diesem Speicher gelesen und zur Anzeige gebracht werden.

Dies führt zu einer starken Belastung der Einrichtungen der Rechenanlage, welche die eigentliche Anwendung abarbeiten sollen, also die Berechnungen, die Datenhaltung etc. durchführen soll. Dabei wird dieser Teil der Rechenanlage sowohl durch eine hohe Belastung seiner Datenpfade zum Transport der Daten von und zum Grafiksubsystem, die zu einem Blockieren des Hauptprozessors oder anderen ihm zugeordneten Einheiten führen kann (siehe auch EP 0350911 A2 als Beispiel eines Multiprozessorsystems, worin der gemeinsame Hauptspeicher dieses eng gekoppelten Multiprozessorsystems als hauptsächliche Bremse beschrieben wird), als auch durch die häufigen Unterbrechungen des Arbeitsablaufes zum Zweck der sofortigen Reaktion auf eine Benutzereingabe oder der Aufrechterhaltung der Aktualität der Darstellung, stark in seiner Leistungsfähigkeit beeinträchtigt. Außerdem ist bei diesen Architekturen eine Voraussage dieser Leistungsfähigkeit ohne Einschränkungen der Verfügbarkeit des Systems für Benutzeranfragen nicht möglich (siehe EP 0350911 A2, wenn der System Support Prozessor mit der Bearbeitung von Interrupts, Semaphoren etc. belastet ist).

Der Erfindung liegt somit die Aufgabe zugrunde, die Belastungen der die eigentliche Anwendung abarbeitenden Einrichtungen der Rechenanlage, welche durch die Realisierung der Benutzerschnittstelle in Darstellung und Funktion entstehen, zu verringern, um dadurch zu effizienteren Rechenanlagen zu kommen, bei denen, selbst bei Beibehaltung bekannter Teilkomponenten und trotz weiter steigenden Anforderungen an die Qualität der Benutzerschnittstelle, eine starke Erhöhung der für die Anwendung verfügbaren Leistung und eine gute Vorraussagbarkeit derselben möglich ist.

Die erfindungsgemäße Lösung ist das Rechnersystem mit Benutzerschnittstelle, das mehrere Prozesseinheiten (101,102) umfaßt, getrennte, interne Bussysteme benutzt, Einrichtungen zur Übertragung von Daten und Nachrichten (103) enthält sowie eine Software zum systemweiten Verwalten der grafischen Benutzerschnittstelle beinhaltet, nach Anspruch 1, mit den Merkmalen, daß
a) die Hard- und Softwarekomponenten des Rechnersystems derart in drei Teile aufgeteilt sind, daß ein Teil 1 (101) die Aufgaben zur Realisierung der Benutzerschnittstelle in Darstellung und Funktion übernimmt, ein Teil 2 (102) vorwiegend die Abarbeitung der Anwendungsprogramme übernimmt und dabei keine für die Benutzeroberfläche notwendigen Betriebsprogramme und Rechnerkomponenten enthält, und ein Teil 3 die restlichen Komponenten (107, 108,109,110) des Rechnersystems sowie eine für den Zugriff auf diese Komponenten geeignete Verbindungsstruktur (104) umfaßt, die Teile 1, 2 und 3 dabei, abgesehen von den externen Peripheriekomponenten (110), als eine Geräteeinheit realisiert werden, die möglicherweise in sich modular aufgebaut ist,
b) die Teile 1, 2 und 3 für interne Aufgaben eigene, von denen der jeweils anderen Teile getrennte Datenpfade besitzen,
c) eine Software- und Hardwareschnittstelle (103) in der Geräteeinheit zwischen Teil 1 (101) und Teil 2 (102) existiert, die den Austausch von Nachrichten und Daten unterstützt, ohne eine direkte ständige Verbindung herzustellen, die den unabhängigen Ablauf der Vorgänge in den Teilen 1 und 2 beeinträchtigt,
d) für jeden Teil 1 und Teil 2 eine eigene, direkte Verbindung (105,106) auf gemeinsam genutzte zusätzliche Einrichtungen des Teil 3 existiert.

Hinsichtlich Ausgestaltungen der Erfindung wird auf die Unteransprüche verwiesen.

Die mit der Erfindung erzielbaren Vorteile bestehen insbesondere in den durch die folgenden Punkte bezeichneten Effekten:
Die Trennung (siehe Anspruch 1a, 1b) des die Benutzerschnittstelle realisierenden Teils 1 von dem Teil 2, der die eigentliche Anwendung abarbeitet, also beispielsweise Berechnungen durchführt, Daten verwaltet oder logische Verknüpfungen tätigt, führt zu einer starken Entkopplung dieser Bereiche und dadurch zu einer weit effizienteren Rechenanlage. Beispielsweise ist ein Kontextwechsel durch den Prozessor, wie sie bei heutigen Architekturen üblich ist, in vielen Fällen nicht erforderlich.
Die Teile 1 und 2 können für ihre jeweiligen Aufgaben sehr viel stärker optimiert werden (siehe Anspruch 2, 3, 5, 6, 7), als dies bei einem System, das beide Aufgaben durch einen Teil bearbeitet, beispielsweise eine einzelne Prozesseinheit bestehend aus Prozessor, Speicher und Ein-/Ausgabe, möglich ist.
Die eigenen Zugriffspfade der Teile 1 und 2 auf gemeinsame Komponenten aus Teil 3 (siehe Anspruch 1a, 1d, 2, 3, 5, 8, 9) steigern die mögliche Leistung des Systems, da beispielsweise während der Teil 1 einen Zugriff auf eine Komponente aus Teil 3 durchführt, um beispielsweise Animationsdaten von einem Massenspeicher oder Netzwerk zu laden, Teil 2 auf seinen lokalen Datenpfaden (siehe Anspruch 1b, 1c, 3, 7) ungestört weiterarbeiten kann. In heute üblichen Systemen müssen diese Zugriffe entweder vom Hauptprozessor selbst realisiert werden, beispielsweise indem er die Daten vom Massenspeicher liest und sie an die Grafikkarte weitergibt, oder es wird zumindest das Bussystem des Hauptprozessors benutzt, der dadurch mehr oder weniger blockiert wird.
Durch eine Ausgestaltung der Erfindung mit geeigneten Synchronisationseinrichtungen für den Zugriff der Teile 1 und 2 auf gemeinsam genutzte Komponenten aus Teil 3 (siehe Anspruch 1d, 8 ,9) kann gewährleistet werden, daß selbst bei Ausnutzung der maximalen Durchsatzleistung der Teil mit der jeweils höchsten Priorität mit minimaler Verzögerung zugreifen kann. Eine eventuell notwendige Synchronisation, kann beispielsweise über die Software- und Hardwareschnittstelle zwischen Teil 1 und 2 (siehe Anspruch 1c, 4) oder durch eine Verbindung der für den Zugriff zuständigen Komponenten aus Teil 1 und 2 (siehe Anspruch 8, 9) erfolgen.
Die strukturelle Vereinigung, des für die Darstellung und des für die Bedienfunktionalität der Benutzerschnittstelle zuständigen Teils der Rechenanlage (siehe Anspruch 1a), ermöglicht weitreichende Optimierungen, die bei einer Trennung dieser Komponenten nicht möglich wären. In den heute üblichen Architekturen wird zwar die Darstellung schon durch eigene Prozessoren beschleunigt, die Realisierung der Rückmeldung an den Benutzer, also die Funktionalität der Benutzerschnittstelle, muß jedoch noch immer vom Hauptprozessor erledigt werden, der dafür die laufenden Berechnungen etc. unterbrechen, also solange anhalten muß. Es kann beispielsweise die objektbezogene Struktur moderner Benutzerschnittstellen bei der neuen Architektur nach Anspruch 1 besser auf die Architektur des Rechners abgebildet werden, da ein Objekt der Benutzerschnittstelle im allgemeinen aus Darstellung und Funktion besteht, die hier von ein und derselben Einheit bearbeitet werden (siehe Anspruch 1a, 1b, 2, 6).
Die Datenhaltung wird einfacher, weil direkt dort, wo die grafische Darstellung erfolgt, auch die Zugehörigkeit eines Koordinatenpunktes auf der Bildfläche, also beispielsweise die Position eines Zeigers, zu den einzelnen Objekten bzw. Strukturen der Benutzeroberfläche erfolgen kann (siehe Anspruch 1a, 1b, 2, 6). Beispielsweise muß die Berechnung der gegenseitigen Verdeckungen solcher Objekte nur einmal erfolgen.
Die Struktur, die durch die Architektur im Rechner definiert ist, ähnelt der Client/Server - Softwarestruktur moderner Betriebssystem-/Benutzeroberflächen Kombinationen. Auch hier wird eine Aufteilung mit Nachrichtenaustausch und Datentransfer vorgesehen (siehe Anspruch 1c, 4). Dadurch ist eine besonders einfache Anpassung solcher Systeme an die neue Architektur gegeben. Ältere Systeme können durch geeignete Maßnahmen ebenfalls abgebildet werden (siehe Anspruch 1c), beispielsweise durch einen Speicherbereich mit Mehrwegzugriff (dual ported memory).
Im Gegensatz zu echten Client/Server Strukturen, wie sie beispielsweise beim Einsatz sogenannter X-Terminals vorzufinden sind, bleiben bei der angegebenen Architektur alle Vorteile der dezentralisierten Hardware mit eigener Rechenleistung für Anwendungen erhalten (siehe Anspruch 5, 6, 7). Außerdem können im Gegensatz zu den u.a. in Patent EP 401803 genannten Möglichkeiten, der Verbindung mehrerer getrennter Recheneinheiten, auch Techniken zum Einsatz kommen, die nur über kurze Verbindungen, also innerhalb eines Gerätes, realisierbar sind (siehe Anspruch 1a, 1c, 4, 8, 9).
Die Architektur zeichnet sich durch eine klare, wenn auch in der Realisierung nicht notwendigerweise physikalische oder räumliche, Modularisierung aus (siehe Anspruch 1a, 1b, 1c, 1d, 10), die ein einfaches Austauschen der Teile zur Leistungsanpassung, Leistungssteigerung oder den Einsatz unterschiedlicher Prozessoren (siehe Anspruch 2, 3, 6, 7) oder Komponenten in den drei Teilen möglich macht.
Es ist leicht zu erkennen, daß die aufgeführten Vorteile der Modularisierung und der Ähnlichkeit zu modernen Betriebs systemen den Einsatz dieser Architektur unabhängig von der Realisierung der Teilkomponenten ermöglicht, sie also für alle bekannten Systeme mit unterschiedlichen Prozessoren und unterschiedlichen Betriebssystem/Benutzeroberflächen Kombinationen anwendbar ist (siehe Anspruch 1a, 1c, 1d, 2, 3).

Im folgenden werden drei mögliche Ausführungsbeispiele der Erfindung beschrieben, die in den Zeichnungen dargestellt sind.

Es zeigen:
- Fig. 1: Architektur für eine Rechenanlage, schematisches Beispiel.
- Fig. 2: Eine mögliche Ausgestaltung der Teile 1 und 2.
- Fig. 3: Eine mögliche Ausgestaltung des Teil 1.

Die in den Zeichnungen verwendeten Abkürzungen werden im Text erläutert.

Es folgt die Erläuterung der Erfindung anhand der Zeichnungen dreier Ausführungsbeispiele nach Aufbau und gegebenenfalls auch nach Wirkungsweise der dargestellten Erfindung.

Die angegebenen Details möglicher Realisierungen, wie spezielle Prozessoren, Bussysteme, etc. dienen nur der Vermittlung eines besseren Verständnisses für die vorliegende Erfindung. Es ist für den Fachmann klar, daß die Erfindung auch ohne derartig spezielle Details realisierbar ist. Es wurden in den Zeichnungen schematische Darstellungen verwendet, um die Erfindung nicht mit unnötigen Einzelheiten zu belasten.

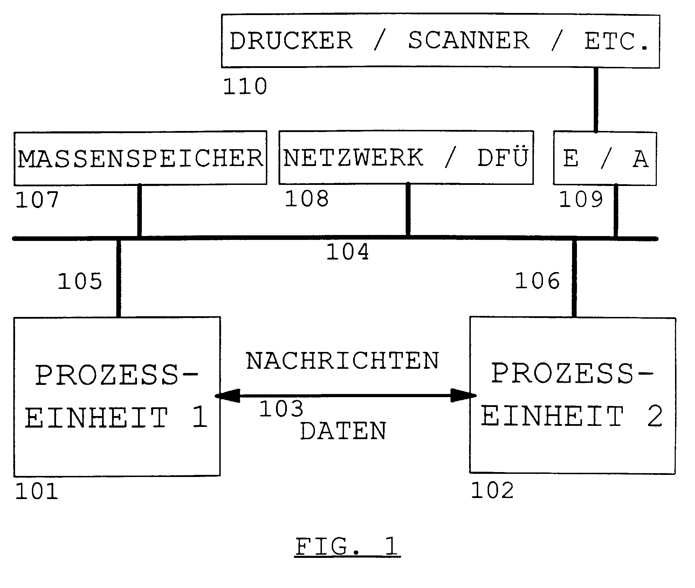

In Fig. 1 ist ein schematisches Beispiel einer Implementierung der Architektur dargestellt. Eine Teil 1 darstellende Prozesseinheit eins 101, die beispielsweise aus einem Mikroprozessor mit Speicher und Peripherieschnittstellen besteht (siehe Anspruch 2), hat eine Schnittstelle 103, für Nachrichten und Daten, zu einer Teil 2 darstellenden, ähnlich aufgebauten, Prozesseinheit zwei 102 (siehe Anspruch 1a, 1c). Nicht eingezeichnet sind die getrennten internen Bussysteme der beiden Prozesseinheiten (siehe Anspruch 1b).

Teil 3 wird in diesem Beispiel durch die Zusatzeinrichtungen 107 (Massenspeicher), 108 (Netzwerk bzw. DFÜ) und 109 (Ein-/Ausgabesteuerung, E/A), den diese Komponenten verbindenden Peripheriebus 104 und die an die E/A 109 angeschlossene externe Peripherie 110 (Drucker, Scanner, etc.) dargestellt (siehe Anspruch 1a).

Prozesseinheit eins 101 ist über einen eigenen Zugiffspfad 105 mit dem Peripheriebus 104 aus Teil 3 verbunden (siehe Anspruch 1d). Entsprechend ist auch die Prozesseinheit zwei 102 über einen eigenen Zugriffspfad 106 mit dem Peripheriebus 104 und somit den gemeinsam genutzten Komponenten 107, 108, 109 und 110 aus Teil 3 verbunden. Die wechselseitige Belegung des Peripheriebusses 104 durch die Prozesseinheiten eins 101 und zwei 102 kann beispielsweise durch ein Kollisionsdetektionsverfahren, ähnlich dem bei Ethernet verwendeten, realisiert werden.

Die Art des Zugriffs auf die einzelnen Komponenten 107, 108, 109 und 110 mittels Peripheriebus 104, sowie die Auswahl der Komponenten sind nur beispielhaft und stellen keine erfindungsgemäßen Merkmale dar. Es könnte genausogut beispielsweise ein Kreuzschienenschalter realisiert werden, der den gleichzeitigen Zugriff der die Teile 1 und 2 darstellenden Prozesseinheiten auf die Komponenten des Teil 3 ermöglichen würde, solange die angesteuerten Komponentengruppen disjunkt sind.

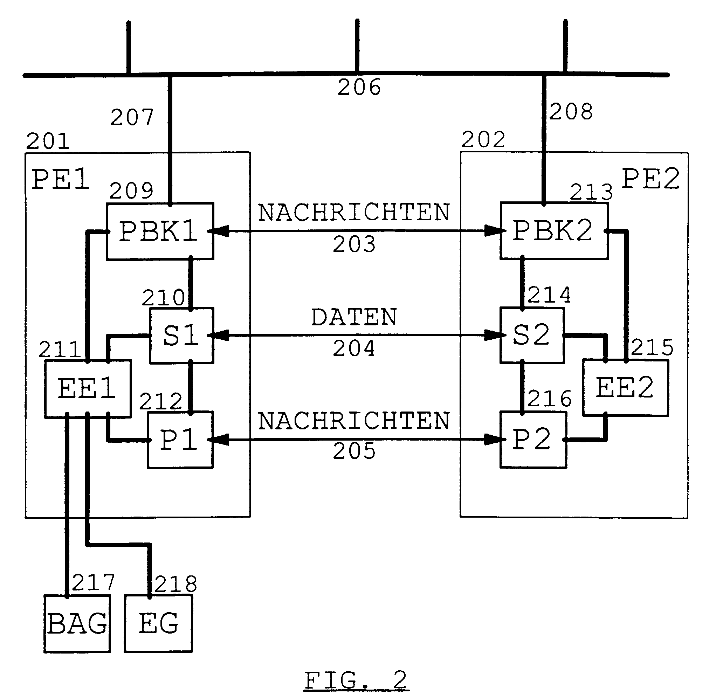

Auch die Ausgestaltung der Prozesseinheiten eins 101 und zwei 102, welche die Teile 1 und 2 aus Anspruch 1 darstellen, ist nur beispielhaft. Eine andere, weiter entwickelte Ausgestaltung ist in Fig. 2 dargestellt. Die Prozesseinheiten sind in dieser Zeichnung mit 201 (Prozesseinheit eins, PE1) und 202 (Prozesseinheit zwei, PE2) bezeichnet, da sie nur eine weitere mögliche Ausgestaltung darstellen (siehe Anspruch 1a, 2, 3, 6, 7).

PE1 201 ist durch einen eigenen Zugriffspfad 207, der hier beispielsweise durch einen SCSI- oder einen IEEE-Bus implementiert sein könnte, mit einem Peripheriebus 206 verbunden (siehe Anspruch 1d). Nicht notwendigerweise äquivalent sei PE2 202 über 208 ebenfalls mit 206 verbunden. Als Zugriffeinrichtung 209 (PeripherieBusKontrolle eins, PBK1) und 213 (PeripherieBusKontrolle zwei, PBK2) seien SCSI- bzw. IEEE-Hostadapter angenommen. Die Verbindung 203 zum Nachrichtenaustausch zwischen PBK1 und PBK2 ist optional (siehe Anspruch 8, 9), könnte aber beispielsweise durch eine zusätzliche Verbindung zwischen den Hostadaptern oder über spezielle Protokolle auf dem Peripheriebus 206 oder über Umwege, mittels der Zugriffspfade 204 für Daten oder 205 für Nachrichten, erfolgen.

PBK1 209 ist weiterhin verbunden mit 210 (Speicher eins, S1), was durch eine Direktzugriffssteuerung (DMA, direkt memory access) zum Speicher S1 realisierbar wäre, und mit 211 (ErweiterungsEinheit eins, EE1). Die EE1 211 (siehe Anspruch 6) beinhaltet beispielsweise Adapter für die Bildausgabe 217 (BildAusgabeGerät, BAG) bzw. zum Anschluß von Eingabegeräten 218 (EingabeGerät, EG). Außerdem hat sie neben der erwähnten Verbindung zu PBK1 209 jeweils eine Verbindung zu S1 210 und zum Prozessor 212 (Prozessor eins, P1). Letzterer könnte ein für Grafikaufgaben optimierter Mikroprozessor sein. Dieser hat eine weitere PE1 201-interne Verbindung zu S1 210. Deutlich werden hier auch die internen, unabhängigen Bussysteme der Teil 1 darstellenden PE1 201 (siehe Anspruch 1b).

Der interne Aufbau von PE2 202 ist sinngemäß der Gleiche. PBK2 213 ist verbunden mit S2 214 (Speicher zwei, S2) und EE2 215 (ErweiterungsEinheit zwei, EE2), die in diesem Beispiel aus einem Mathematikkoprozessor bestehen könnte, (siehe Anspruch 7). S2 214 hat Verbindung mit PBK2 213, EE2 215 und dem Prozessor P2 216, der seinerseits auch Kontakt zu EE2 215 hat. P2 216 könnte ein beliebiger Mikroprozessor sein. An dieser Stelle zeigt sich auch, daß die vorliegende Erfindung leicht an bestehende Architekturen angepaßt werden kann, indem die alte Architektur den Teil 2, hier PE2 202, darstellt, der auf geeignete Weise, beispielsweise mit einer der beschriebenen Methoden, um einen Teil 1, hier PE1 201 ergänzt und mit diesem verbunden werden kann. Dabei können eventuell Komponenten der ursprünglichen Architektur, z.B. eine Grafikkarte, in der PE1 201 eingesetzt werden.

Die Verbindung 204 für Daten zwischen S1 210 und S2 214 könnte als DMA-Transfer realisiert sein, der von den Prozessoren P1 212 und P2 216 initiiert werden kann. Die Verbindung 205 für Nachrichten könnte durch Unterbrechungsleitungen realisiert sein, durch die die Prozessoren sich gegenseitig von Vorkommnissen unterrichten könnten, die dann eventuell von einem Transfer auf 204 begleitet würden. Alternativ könnten auch Warteschlangen in Hardware implementiert werden (beispielsweise als FIFO-Speicher) (siehe Anspruch 1c, 4).

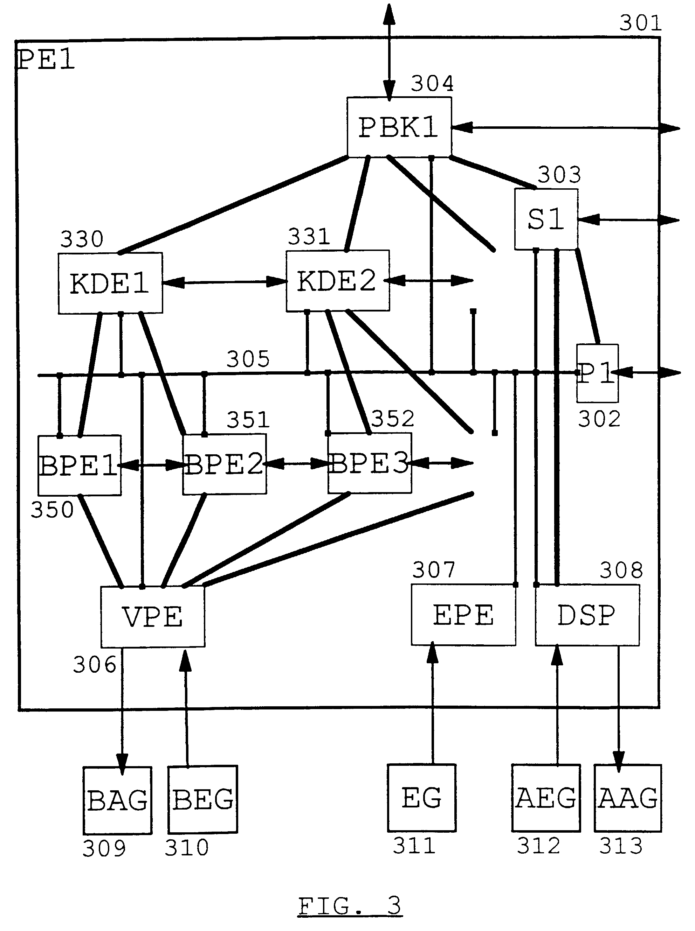

Wenn die Verbindungen 203, 204 und 205 wohldefiniert wurden, so kann bei Bedarf die PE1 201 auch später noch, beispielsweise gegen eine in Fig. 3 dargestellte Variante PE1 301, ausgetauscht werden. Das gilt natürlich auch umgekehrt für eine andere fiktive Implementierung von PE2 202. Hier wird das mögliche Modulkonzept ersichtlich (siehe Anspruch 10).

Die PE1 301 aus Fig. 3 ist von ihrer Grundstruktur her aufgebaut wie die PE1 201. Eine Korrelation ergibt in Bezug auf die prinzipielle Funktion : P1 302 entspricht P1 212, wird in diesem Fall aber eher als Universalprozessor implementiert sein, da die Grafikfunktionen, wie noch erläutert wird, von anderen Komponenten übernommen werden. Er hat Verbindung mit S1 303, der S1 210 entspricht, vielleicht aber andere Kenndaten hat. Dieser hat wiederum Verbindung mit PBK1 304, welcher PBK1 209 entspricht. P1 302, S1 303 und PBK1 304 haben alle eine oder mehrere Verbindungen zum Rest in PE1 301. Dieser Rest stellt das Äquivalent zu EE1 211 dar. Im Einzelnen seien hier beispielhaft folgende Komponenten von EE1 211 aufgeführt: Ein Digitaler Signalprozessor (DSP) 308 mit Verbindung zu S1 303 und Schnittstellen zu 312 (AudioEingabeGerät, AEG) und 313 (AudioAusgabeGerät, AAG). Eine EingabeProzessEinheit EPE 307, die eine Schnittstelle zu einem oder mehreren EingabeGeräten EG 311 hat. Eine VideoProzessEinheit (VPE) 306, die einerseits eine Schnittstelle zu 309 (BildAusgabeGerät, BAG) und 310 (BildEingabeGerät, BEG) hat, andererseits aber auch Zugriff auf eine skalierbare Anzahl von BildProzessEinheiten (BPE1, BPE2, BPE3, ...) 350, 351, 352, ... hat. Die BPEs könnten als kleine Module aus einem einfachen Grafikprozessor, eventuell mit BITBLT-Funktion, und einem Teil des Bildspeichers bestehen. Sie generieren parallel die Darstellung, die von VPE 306 ausgelesen und als Videosignal ausgegeben wird, bzw. als Videosignal am VPE 306 ankommt und von diesem auf die BPEs nach Wandlung verteilt wird. Die BPEs haben einzeln oder gruppenweise Verbindung mit KompressionDekompressionEinheiten (KDE1, KDE2, ...) 330, 331, ... die Datenströme zwischen PBK1 304 und den verschiedenen KDEs vermitteln und diese dabei wunschgemäß wandeln.
Natürlich kann die PBK1 304 auch beispielsweise aus mehreren parallelen Zugriffseinheiten bestehen, um eine größere Bandbreite zu erzielen.

Gesteuert werden alle Komponenten durch einen Konfigurations- und Nachrichtenbus 305, über den der Prozessor P1 302 alles koordiniert. Es können auch Unterbrechungssignale oder sehr kleine Datenmengen, wie ein einzelnes Zeichen von der Tastatur über diesen Bus übertragen werden (siehe Anspruch 1a, 2, 6).

Nicht dargestellt wurden mögliche weitere eigene Zugriffspfade der PE1 bzw. PE2 auf eigene Komponenten in Teil 3. Dies könnte beispielsweise ein Modem sein, das über eine für PE2 exklusive Schnittstelle angeschlossen ist, oder ähnliches (siehe Anspruch 5).

## Patentansprüche

1. Rechnersystem mit Benutzerschnittstelle, das mehrere Prozesseinheiten (101,102) umfaßt, getrennte, interne Bussysteme benutzt, Einrichtungen zur Übertragung von Daten und Nachrichten (103) enthält sowie eine Software zum systemweiten Verwalten der grafischen Benutzerschnittstelle beinhaltet,
dadurch gekennzeichnet, daß
a) die Hard- und Softwarekomponenten des Rechnersystems derart in drei Teile aufgeteilt sind, daß ein Teil 1 (101) die Aufgaben zur Realisierung der Benutzerschnittstelle in Darstellung und Funktion übernimmt, ein Teil 2 (102) vorwiegend die Abarbeitung der Anwendungsprogramme übernimmt und dabei keine für die Benutzeroberfläche notwendigen Betriebsprogramme und Rechnerkomponenten enthält, und ein Teil 3 die restlichen Komponenten (107, 108,109,110) des Rechnersystems sowie eine für den Zugriff auf diese Komponenten geeignete Verbindungsstruktur (104) umfaßt, die Teile 1, 2 und 3 dabei, abgesehen von den externen Peripheriekomponenten (110), als eine Geräteeinheit realisiert werden, die möglicherweise in sich modular aufgebaut ist,
b) die Teile 1, 2 und 3 für interne Aufgaben eigene, von denen der jeweils andere Teile getrennte, Datenpfade besitzen,
c) eine Software- und Hardwareschnittstelle (103) in der Geräteeinheit zwischen Teil 1 (101) und Teil 2 (102) existiert, die den Austausch von Nachrichten und Daten unterstützt, ohne eine direkte ständige Verbindung herzustellen, die den unabhängigen Ablauf der Vorgänge in den Teilen 1 und 2 beeinträchtigt,
d) für jeden Teil 1 und Teil 2 eine eigene, direkte Verbindung (105,106) auf gemeinsam genutzte zusätzliche Einrichtungen des Teil 3 existiert.

2. Rechnersystem nach Anspruch 1,
dadurch gekennzeichnet, daß
der Teil 1 (201) realisiert wird durch mindestens einen eigenen Prozessor (212) mit zugehörigem Speicher (210) und Zugriffseinrichtung (209) auf die mit Teil 2 (202) gemeinsam genutzten Komponenten aus Teil 3.

3. Rechnersystem nach einem der vorhergehenden Ansprüche,
dadurch gekennzeichnet, daß
der Teil 2 (202) realisiert wird durch mindestens einen eigenen Prozessor (216) mit zugehörigem Speicher (214) und Zugriffseinrichtung (213) auf die mit Teil 1 (201) gemeinsam genutzten Komponenten aus Teil 3.

4. Rechnersystem nach einem der vorhergehenden Ansprüche,
dadurch gekennzeichnet, daß
die Schnittstelle (103) zwischen Teil 1 und Teil 2 durch Verwendung von Unterbrechungssignalen und Warteschlangen den effizienten Austausch der Daten (204) und Nachrichten (205) unterstützt.

5. Rechnersystem nach einem der vorhergehenden Ansprüche,
dadurch gekennzeichnet, daß
es zusätzliche eigene Zugriffspfade für den Teil 1 und/oder den Teil 2 auf eigene, nur dem jeweiligen Teil zugeordneten Komponenten aus Teil 3 gibt.

6. Rechnersystem nach einem der vorhergehenden Ansprüche,
dadurch gekennzeichnet, daß
zusätzliche eigene Einrichtungen (211) innerhalb des Teil 1 existieren, welche die Funktion unterstützen, vorzugsweise solche zur Beschleunigung des Grafikaufbaus (350,351,352,...) und/oder zur Unterstützung (306,307,308) verschiedener Ein-/Ausgabegeräte (309...313) und/oder lokale Massenspeicher und/oder der Kompression/Dekompression von Daten (330,331,...).

7. Rechnersystem nach einem der vorhergehenden Ansprüche,
dadurch gekennzeichnet, daß
zusätzliche eigene Einrichtungen (215) innerhalb des Teil 2 existieren, welche die jeweilige Funktion unterstützen, vorzugsweise zur Beschleunigung von mathematischen Funktionen und/oder Funktionen der Datenhaltung, wie zum Beispiel phonetische Suche in Volltexten, und/oder lokale Massenspeicher.

8. Rechnersystem nach einem der vorhergehenden Ansprüche,
dadurch gekennzeichnet, daß
zwischen den Zugriffseinrichtungen (209,213) der Teile 1 und 2, die den Zugriff auf die gemeinsam genutzten Komponenten des Teil 3 ermöglichen, eine Verbindung (203) besteht, die vorzugsweise durch eine prioritätsgesteuerte Zuweisung eine Kollision auf den gemeinsam genutzten Datenpfaden behandelt, also verhindert oder gezielt einsetzt.

9. Rechnersystem nach Anspruch 8,
dadurch gekennzeichnet, daß
die Verbindung (203) durch eine prioritätsgesteuerte Zuweisung realisiert wird, die vorzugsweise dynamisch veränderbare Prioritäten benutzt, beispielsweise um in besonderen Fällen die Priorität zugunsten einer der beiden Teile 1 oder 2 gegenüber der Grundkonfiguration zu verändern.

10. Rechnersystem nach einem der vorhergehenden Ansprüche,
dadurch gekennzeichnet, daß
die Teile 1, 2 und 3 in Modulbauweise realisiert sind und die Hard- und Softwareschnittstellen (103,105,106) derart definiert sind, daß unterschiedliche Konfigurationen und/oder eine Nachrüstbarkeit bei wechselnden Anforderungen unterstützt werden.

## Claims

1. Computer system with user interface including a number of processing units (101, 102), using separate internal bus systems, containing equipment for transferring data and messages (103) and software for a system-wide administration of the graphical user interface
characterized by
a) the hardware and software components of the computer system being divided into three parts in such a way that one of them, Part 1 (101), takes over the function of providing the user interface in presentation and function; another, Part 2 (102), mainly operates the application programs and thus does not contain any of the operating programs and computer components needed for the user interface; and the third, Part 3, takes charge of the remaining components (107, 108, 109, 110) of the computer system and of a connecting structure (104) suitable for providing access to these components; Parts 1, 2 and 3 being implemented, apart from any external peripheral components (110), as a single unit of equipment which could itself be modular in design,
b) Parts 1, 2, and 3 each possessing their own data paths for internal tasks, separate from those of the other parts,
c) a software and hardware interface (103) existing in the unit of equipment between Part 1 (101) and Part 2 (102), which interface supports exchange of messages and data without creating a direct, permanent connection affecting the independent running of the processes in Parts 1 and 2,
d) Part 1 and Part 2 each having their own, direct connection (105, 106) to jointly used additional components in Part 3.

2. Computer system along the lines of Claim 1
characterised by
Part 1 (201) being implemented by at least one processor of its own (212) with an accompanying memory (210) and an access component (209) to those components in Part 3 which are to be jointly used with Part 2 (202);

3. Computer system along the lines of one of the foregoing claims
characterised by
Part 2 (202) being implemented by at least one processor of its own (216) with an accompanying memory (214) and an access component (213) to those components in Part 3 which are to be jointly used with Part 1 (201);

4. Computer system along the lines of one of the foregoing claims
characterised by
the interface (103) between Part 1 and Part 2 supporting an efficient exchange of data (204) and messages (205) through a use of interrupt signals and queues;

5. Computer system along the lines of one of the foregoing claims
characterised by
the presence of additional access paths exclusively designated for Part 1 and/or Part 2 to connect to those components in Part 3 which are allocated exclusively to them;

6. Computer system along the lines of one of the foregoing claims
characterised by
the presence of additional specific equipment (211) within Part 1 which supports any relevant functions, preferably those of accelerating the graphics assembly (350,351,352,...) and/or supporting (306,307,308) various input/output devices (309...313) and/or local mass storage and/or the compression/decompression of data (330,331...);

7. Computer system along the lines of one of the foregoing claims
characterised by
the presence of additional specific equipment (215) within Part 2 which supports various functions, preferably those of accelerating mathematical functions and/or functions for retaining data, such as the phonetic search in complete texts, and/or local mass storage;

8. Computer system along the lines of one of the foregoing claims
characterised by
the presence of a connection (203) between access components (209,213) in Parts 1 and 2, which access components facilitate access to jointly used components in Part 3, which connection preferably handles (meaning prevents or deliberately uses) a collision on any jointly used data paths by priority control.

9. Computer system along the lines of claim 8
characterised by
the connection (203) being implemented in the form of priority control which preferably uses dynamically changeable priorities, for instance enabling priorities to be changed in particular cases in favor of Part 1 or in favor of Part 2 compared to a base configuration;

10. Computer system along the lines of one of the foregoing claims
characterised by
Parts 1, 2, and 3 being implemented as a modular design in which hardware and software interfaces (103,105,106) are defined to support various different configurations and/or a retro-fitting facility to meet changing requirements.

## Revendications

1. Système informatique avec interface utilisateur, qui comprend plusieurs unités de processus (101,102), utilise des systèmes de bus internes séparés, comporte des dispositifs de transfert de données et de messages (103) et comprend un logiciel gérant pour tout le système l'interface utilisateur graphique
caractérisé par le fait
a) que les composants matériels et logiciels du système informatique sont répartis en trois parties de telle sorte qu'une partie 1 (101) se charge des tâches pour la réalisation de l'interface utilisateur en ce qui concerne la représentation et la fonction; qu'une partie 2 (102) prend en charge surtout le déroulement des programmes d'application et ne contient pas des programmes d'exploitation ni de composant nécessaires à l'interface utilisateur; et qu'une partie 3 comprend les composants restants (107, 108, 109, 110) du système informatique ainsi qu'une structure d'accès (104) à ces composants appropriée, les parties 1, 2 et 3 étant réalisées, à part les composants périphériques externes (110), comme une unité d'appareils, qui peut elle-même être modulaire,
b) que chacune des parties 1, 2 et 3 possède pour les tâches internes des chemins de données propres, séparés de ceux des autres parties,
c) qu'il existe une interface logicielle et matérielle (103) dans l'unité d'appareils entre la partie 1 (101) et la partie 2 (102), qui soutient l'échange de messages et de données, sans établir une liaison directe permanente, qui gênerait le déroulement indépendant des processus dans les parties 1 et 2,
d) qu'il existe pour chacune des parties 1 et 2 une liaison directe propre (105, 106) avec les équipements supplémentaires de la partie 3 utilisés en commun.

2. Système informatique d'après la revendication 1
caractérisé par le fait
que la partie 1 (201) est réalisée par au moins un processeur propre (212) avec mémoire correspondante (210) et dispositif d'accès (209) aux composants de la partie 3 utilisés en commun avec la partie 2 (202).

3. Système informatique d'après une des revendications précédantes
caractérisé par le fait
que la partie 2 (202) est réalisée par au moins un processeur propre (216) avec mémoire correspondante (214) et dispositif d'accès (213) aux composants de la partie 3 utilisés en commun avec la partie 1 (201).

4. Système informatique d'après une des revendications précédantes
caractérisé par le fait
que l'interface (103) entre la partie 1 et la partie 2 soutient l'échange efficient de données (204) et de messages (205) grâce à l'utilisation de signaux d'interruption et de files d'attente.

5. Système informatique d'après une des revendications précédantes
caractérisé par le fait
qu'il existe des chemins d'accès supplémentaires propres, pour la partie 1 et/ou la partie 2, à des composants de la partie 3 affectés en exclusivité à la partie respective.

6. Système informatique d'après une des revendications précédantes
caractérisé par le fait
qu'il existe des dispositifs (211) supplémentaires propres dans la partie 1, qui soutiennent sa fonction, de préférence pour accélérer l'affichage graphique (350, 351, 352, ...) et/ou pour assister (306, 307, 308) différents périphériques d'entrée/de sortie (309, ..., 313) et/ou des mémoires de masse locales et/ou la compression/décompression de données (330, 331, ...).

7. Système informatique d'après une des revendications précédantes
caractérisé par le fait
qu'il existe des dispositifs (215) supplémentaires propres dans la partie 2, qui soutiennent la fonction respective, de préférence pour accélérer les fonctions mathématiques et/ou des fonctions de conservation de données, comme la recherche phonétiques dans des textes entiers, et/ou des mémoires de masse locales.

8. Système informatique d'après une des revendications précédantes
caractérisé par le fait
qu'il existe entre les dispositifs d'accès (209, 213) des parties 1 et 2, qui permettent l'accès aux composants de la partie 3 utilisés en commun, une liaison (203) qui traite, de préférence à l'aide d'une assignation contrôlée par priorités, une collision sur les chemins de données communs, donc l'empêche ou l'utilise délibérément.

9. Système informatique d'après la revendication 8
caractérisé par le fait
que la liaison (203) est réalisée avec une assignation contrôlée par priorités, qui utilise de préférence des priorités qui peuvent être changées de façon dynamique, pour par exemple modifier la priorité en faveur d'une des deux parties 1 ou 2 par rapport à la configuration de base.

10. Système informatique d'après une des revendications précédantes
caractérisé par le fait
que les parties 1, 2 et 3 sont réalisées en modules et que les interfaces matérielles et logicielles (103, 105, 106) sont définies de telle sorte qu'elles soutiennent des configurations différentes et/ou de compléter le système en cas de nouveaux besoins.
